# EUROPÄISCHE PATENTANMELDUNG

(11) **EP 3 718 394 A1**
(43) Veröffentlichungstag der Anmeldung: **07.10.2020**
(21) Anmeldenummer: 20167007.2
(22) Anmeldetag: 31.03.2020
(51) Int. Cl.: A01G 9/02

(54) **VERTIKALBEET AUS STAPELBAREN PFLANZMODULEN**

(30) Priorität: 01.04.2019 DE 102019108383
(71) Anmelder: Alto Holding GmbH, 82140 Olching (DE)
(72) Erfinder: LIMMER, Christian, 82140 Olching (DE)
(74) Vertreter: Manitz Finsterwald Patent- und Rechtsanwaltspartnerschaft mbB

(57) **Zusammenfassung**

Die Erfindung betrifft ein Stapelbares Pflanzmodul (11) für ein Vertikalbeet (13), mit einem Pflanzbereich (15) und mit einem Wassertank (17), wobei der Pflanzbereich (15) in einem zumindest teilweise nach oben offenen Aufnahmebereich (19) des Moduls (11) enthalten ist, der durch eine Vorderwand (21) des Moduls (11) begrenzt ist, die sich zwischen einem vorderen oberen Bereich und einem weiter hinten gelegenen unteren Bereich erstreckt, und wobei der Wassertank (17) einen Abfluss (23) und einen Überlauf (25) aufweist. Außerdem betrifft die Erfindung ein Vertikalbeet mit einer Mehrzahl von derartigen übereinander angeordneten Pflanzmodulen.

## Beschreibung

Die Erfindung betrifft ein Pflanzmodul für ein Vertikalbeet sowie ein Vertikalbeet mit einer Mehrzahl von übereinander angeordneten Pflanzmodulen.

Vertikalbeete sind grundsätzlich bekannt und erfreuen sich einer zunehmenden Beliebtheit. Unter einem Vertikalbeet ist eine Anordnung aus einer Mehrzahl von einzelnen Pflanzbehältern zu verstehen, die übereinander angeordnet sind und jeweils einen Pflanzbereich aufweisen, der mit Erde gefüllt und bepflanzt werden kann.

Eine große Vielfalt von Vertikalbeeten unterschiedlichster Ausprägung ist am Markt verfügbar. Bekannte Vertikalbeete sind allerdings häufig schwer und sperrig, und zwar vor allem dann, wenn ein separates Gestell erforderlich ist, um beispielsweise eine Mehrzahl einzelner Pflanzbehälter zu tragen. Andere Lösungen, die ohne ein separates Traggestell auskommen, benötigen stattdessen z.B. an einer Haus- oder Garagenwand zu befestigende Halterungen für die Pflanzbehälter, was folglich beim Aufbau des Vertikalbeetes die Verwendung zusätzlicher Befestigungsmittel und den Einsatz von Werkzeugen erfordert. Viele bekannte Vertikalbeete weisen zudem entweder komplexe Bewässerungssysteme oder überhaupt keine das Bewässern erleichternden Hilfsmittel auf.

Aufgabe der Erfindung ist es, ein Vertikalbeet zu schaffen, das diese Nachteile nicht besitzt.

Die Lösung dieser Aufgabe erfolgt durch die Merkmale der unabhängigen Ansprüche.

Das erfindungsgemäße Pflanzmodul ist stapelbar und weist einen Pflanzbereich und einen Wassertank auf, wobei der Pflanzbereich in einem zumindest teilweise nach oben offenen Aufnahmebereich des Moduls enthalten ist, der durch eine Vorderwand des Moduls begrenzt ist, die sich zwischen einem vorderen oberen Bereich und einem weiter hinten gelegenen unteren Bereich erstreckt, und wobei der Wassertank einen Abfluss und einen Überlauf aufweist. Das Pflanzmodul kann mehrere Pflanzbereiche und/oder mehrere Wassertanks aufweisen. Das erfindungsgemäße Vertikalbeet umfasst eine Mehrzahl von derartigen Pflanzmodulen, die übereinander angeordnet sind.

Durch die erfindungsgemäße Stapelbarkeit der Pflanzmodule erübrigen sich separate Traggestelle oder andere Ständerlösungen und ist es nicht erforderlich, die Pflanzmodule direkt oder mittels zusätzlicher Halterungen an einer Haus- oder Garagenwand zu befestigen.

Vorzugsweise sind die Pflanzmodule derart ausgebildet, dass sie direkt aufeinandergestapelt werden können. Alternativ oder zusätzlich kann vorgesehen sein, dass Zwischenelemente vorhanden sind, die jeweils zwischen zwei unmittelbar übereinander angeordneten Pflanzmodulen zu positionieren sind. Pflanzmodule, die wahlweise oder nur unter Verwendung derartiger Zwischenelemente gestapelt werden können, sind ebenfalls stapelbare Pflanzmodule im Sinne der Erfindung. Die Zwischenelemente können als Adapter zwischen den Modulen dienen. Ferner können die Zwischenelemente es ermöglichen, die Höhenposition eines jeweiligen Pflanzmoduls in einem Ausmaß zu variieren, das kleiner als eine Modulhöhe ist. Die Zwischenelemente können z.B. als U-förmige, nach vorne offene Rahmenteile ausgebildet sein, die zwischen den Seiten- und Rückwänden der Module positioniert sind.

Durch die sich von einem vorderen oberen Bereich zu einem weiter hinten gelegenen unteren Bereich erstreckende Vorderwand des Moduls liegt der Pflanzbereich des jeweils darunterliegenden Moduls frei, sodass die dort wachsenden Pflanzen ausreichend Licht erhalten und sich nach oben ausbreiten können.

Durch das Vorsehen eines Wassertanks mit Abfluss und Überlauf lässt sich ein äußerst effizientes Wassermanagement realisieren: Der Abfluss kann zum Bewässern des Pflanzbereiches des jeweils darunterliegenden Moduls und der Überlauf zum Befüllen des Wassertanks des darunterliegenden Moduls genutzt werden. Dabei können der Abfluss und der Überfluss derart ausgebildet sein, dass beim Befüllen des Wassertanks das Wasser vergleichsweise langsam über den Abfluss austritt, sodass der Wassertank überläuft und so innerhalb einer vergleichsweise kurzen Füllzeit die Wassertanks aller übereinander angeordneter Pflanzmodule kaskadenartig nacheinander vollständig gefüllt werden. Die Abgabe des Wassers über den Abfluss an den jeweils darunterliegenden Pflanzbereich erfolgt vergleichsweise langsam, sodass in Abhängigkeit von der Größe des Wassertanks und der jeweiligen Witterung ein ausreichend großer Wasservorrat vorhanden ist, der ohne Weiteres zumindest mehrere Tage vorhalten kann.

Das erfindungsgemäße Konzept ermöglicht eine gezielte Einbringung des Wassers in den jeweiligen Pflanzbereich, und zwar insbesondere derart, dass das Wasser konzentriert bei den Pflanzen eingebracht wird. Dies führt zu einer beträchtlichen Reduzierung von Verdunstungsverlusten und hat außerdem für viele gerade typischerweise in Vertikalbeeten von Privathaushalten angebaute Pflanzen, insbesondere Gemüse, den Vorteil, dass das Wasser nicht von oben, was Fäulnis und Pilzerkrankungen fördert, sondern im Wurzelbereich zugeführt wird. Im Gegensatz zu einer dauerhaften Bewässerungslösung, bei der die Pflanzen permanent von unten mit Wasser versorgt werden, ermöglich die Erfindung eine intvervallmäßige Wasserversorgung, was das Wurzelwachstum anregt und die Pflanzen so gewissermaßen einem positiven Stress aussetzt, was z.B. bei Gemüse die Geschmacksbildung fördert.

Das erfindungsgemäße Vertikalbeet kann aufgrund der Modulbauweise mit den leicht handhabbaren, stapelbaren Pflanzmodulen auf denkbar einfache Weise und insbesondere werkzeuglos aufgestellt werden und erfordert dank des erfindungsgemäßen Bewässerungskonzeptes nur einen Minimalaufwand bei der Pflege der Pflanzen.

Bevorzugte Ausführungsformen der Erfindung sind auch in den abhängigen Ansprüchen, der nachfolgenden Beschreibung sowie der Zeichnung angegeben.

Wie vorstehend bereits erwähnt, ist bevorzugt vorgesehen, dass der Abfluss des Wassertanks zum Bewässern des Pflanzbereiches eines unterhalb des Moduls befindlichen weiteren Pflanzmoduls ausgebildet ist. Alternativ oder zusätzlich kann vorgesehen sein, dass der Überlauf des Wassertanks zum Befüllen des Wassertanks eines unterhalb des Moduls befindlichen weiteren Pflanzmoduls ausgebildet ist.

Bevorzugt erstreckt sich die Vorderwand des Moduls bis zur Oberseite des Moduls und/oder bis zur Unterseite des Moduls. Die Vorderwand kann einen ebenen oder einen gekrümmten Verlauf aufweisen. Beispielsweise verläuft die Vorderwand schräg unter einem Winkel zur Vertikalen, der zwischen 30° und 60° liegt.

Insbesondere wird der Verlauf der Vorderwand derart gewählt, dass sich ein optimales Verhältnis zwischen Volumen des Pflanzbereiches einerseits und lichte Weite bzw. Größe des Platzes unterhalb der Vorderwand für die im Pflanzbereich des darunterliegenden Moduls wachsenden Pflanzen andererseits ergibt.

Vorzugsweise ist vorgesehen, dass die Vorderwand unmittelbar den Pflanzbereich begrenzt.

Das Modul besitzt vorzugsweise eine Breite, die größer als die Tiefe des Moduls und größer als die Höhe des Moduls ist. Vorzugsweise weist die Modulbreite das 2- bis 3-fache der Modulhöhe und/oder das 2- bis 3-fache der Modultiefe auf.

Die Breite des Moduls kann im Bereich von 50 cm bis 100 cm liegen, insbesondere im Bereich von 60 cm bis 80 cm. Die Höhe und die Tiefe des Moduls können jeweils im Bereich von 20 cm bis 40 cm liegen, insbesondere im Bereich von 25 bis 35 cm. Davon abweichend können die Module erfindungsgemäß auch deutlich breiter oder deutlich schmaler sein. Module mit einer Breite von beispielsweise 40cm oder weniger können z.B. für Kräuter verwendet werden und kommen auch als Indoor-Variante in Frage. Beispielsweise für die Außenbegrünung von Häusern können Module mit einer Breite von mehreren Metern eingesetzt werden, die insbesondere auch als Industrie-Variante in Frage kommen. Die Modultiefe und die Modulhöhe können dann entsprechend angepasst werden. Mit anderen Worten ist das erfindungsgemäße Modul beliebig skalierbar. Die Proportionen des Moduls können für jede Modulgröße zumindest im Wesentlichen gleich sein, alternativ aber auch variieren. So kann z.B. ein Modul großer Breite eine relativ geringe Tiefe aufweisen und ein relativ schmales Modul vergleichsweise tief sein. Die Funktionalität des erfindungsgemäßen Bewässerungskonzeptes ist dabei in vorteilhafter Weise unabhängig von der Modulgröße und von den Modulproportionen gegeben.

Die Höhe und die Tiefe des Moduls können entweder zumindest näherungsweise gleich groß oder voneinander verschieden sein.

Bevorzugt werden die Abmessungen des Moduls derart gewählt, dass ein optimaler Versand auf genormten Paletten möglich ist. Vor diesem Hintergrund kann beispielsweise die Modulbreite 79 cm, die Modulhöhe 29 cm und die Modultiefe ebenfalls 29 cm betragen.

Vorzugsweise besitzt das Modul eine kastenartige Grundform, die von der Vorderwand, einer bevorzugt vertikalen Rückwand und zwei bevorzugt vertikalen Seitenwänden definiert ist.

Die Seitenwände können zumindest bereichsweise über die Vorderwand hinaus nach vorne vorstehen. Die Standfestigkeit und somit die Stapelbarkeit der Pflanzmodule wird hierdurch verbessert. Insbesondere können die Seitenwände eine quadratische oder rechteckige Grundform aufweisen.

Gemäß einem weiteren Ausführungsbeispiel ist vorgesehen, dass eine Standfläche des Moduls und eine Auflagefläche des Moduls jeweils zumindest von wenigstens einem Teil der Stirnseiten der beiden Seitenwände, bevorzugt zusätzlich der Rückwand, gebildet sind.

Das Modul kann einen, bevorzugt ebenen, Boden aufweisen, der sich vorzugsweise zwischen dem unteren Bereich der Vorderwand und einer Rückwand des Moduls erstreckt.

Bevorzugt ist vorgesehen, dass der Modulboden unmittelbar den Pflanzbereich begrenzt.

Eine weitere Ausgestaltung der Erfindung schlägt vor, dass der Modulboden mit einem Abfluss versehen ist und ein zu dem Abfluss führendes Gefälle aufweist. Unerwünschte Staunässe, wie sie anderenfalls beispielsweise nach ergiebigen Regenfällen auftreten könnte, wird hierdurch vermieden, da überschüssiges Wasser abfließen kann.

Der Modulboden kann gegenüber einer Standfläche des Moduls nach oben versetzt angeordnet sein.

Vorzugsweise ist der Wassertank in dem Aufnahmebereich angeordnet. Gemäß einer möglichen Ausgestaltung der Erfindung ist der Wassertank in einem hinteren Bereich des Moduls angeordnet.

Gemäß einem weiteren Ausführungsbeispiel der Erfindung sind der Wassertank und ein mit einem Abfluss versehener Modulboden vertikal übereinander angeordnet. Hierdurch ist es möglich, dass durch den Modulboden abfließendes Wasser direkt unter dem Einfluss der Schwerkraft in den Wassertank eines darunterliegenden Moduls gelangt.

Vorzugsweise weist der Wassertank einen Boden auf, der von dem Modulboden vertikal beabstandet ist. Vorzugsweise ist zwischen dem Boden des Wassertanks und dem Modulboden ein zum Aufnahmebereich, insbesondere zum Pflanzbereich, gehörender Zwischenraum vorhanden.

Der Boden des Wassertanks kann ein zu dem Abfluss des Wassertanks führendes Gefälle aufweisen.

Vorzugsweise bildet der gesamte Aufnahmebereich mit Ausnahme des von dem Wassertank eingenommenen Raumes den Pflanzbereich.

Gemäß einem Ausführungsbeispiel der Erfindung bilden der Aufnahmebereich und der Wassertank eine als Ganzes handhabbare Einheit. Der Aufnahmebereich und der Wassertank können lösbar oder unlösbar miteinander verbunden sein.

Ferner kann vorgesehen sein, dass der Aufnahmebereich und der Wassertank an einem gemeinsamen Basisteil angeordnet oder von einem gemeinsamen, bevorzugt einstückig ausgebildeten Basisteil gebildet sind.

Der Aufnahmebereich kann von einem Basisteil in Form eines Behälters gebildet sein, wobei der Wassertank entweder ein separates, am Behälter angeordnetes Bauteil oder einstückig mit dem Behälter ausgebildet ist. Wenn der Wassertank ein separates Bauteil ist, kann dieses beispielsweise in den Behälter eingesetzt oder eingehängt oder an den Behälter angehängt sein.

Gemäß einer bevorzugten Ausgestaltung ist das Basisteil wasserundurchlässig. Bevorzugt ist das Basisteil aus Kunststoff hergestellt, beispielsweise aus Silikon. Alternativ kann das Basisteil z.B. aus Metall hergestellt sein.

Das Basisteil kann zumindest bereichsweise von einer äußeren Verkleidung umgeben sein. Dieses Konzept ermöglicht einen größeren Spielraum bei der Gestaltung des äußeren Erscheinungsbildes des erfindungsgemäßen Pflanzmoduls, da die Verkleidung weder wasserundurchlässig noch dafür geeignet sein muss, permanent mit zumindest zeitweise feuchter oder nasser Erde in Berührung zu stehen.

Die äußere Verkleidung kann von einer Aufnahme gebildet sein, in welche das Basisteil, insbesondere passgenau, einsetzbar ist. Die Aufnahme kann beispielsweise als stabiler Außenkorpus ausgebildet sein, in die das als Einlage ausgebildete Basisteil eingesetzt werden kann. Eine solche Inlay-Lösung hat den Vorteil, dass bei der Materialwahl für die Einlage einerseits und für den Außenkorpus andererseits eine größere Flexibilität gegeben ist. Das Material für den Außenkorpus muss nicht wasserdicht und verrottungssicher sein, während beim Material für die Einlage das äußere Erscheinungsbild von untergeordneter Bedeutung ist und die mechanische Stabilität des Moduls insgesamt durch das Material des Außenkorpus sichergestellt werden kann.

Der Wassertank erstreckt sich vorzugsweise über zumindest im Wesentlichen die gesamte Breite des Moduls. Bevorzugt ist der Wassertank von oben befüllbar. Der Wassertank kann oben offen sein. Alternativ kann der Wassertank mit einer Abdeckung versehen sein, in der zumindest eine Einfüllöffnung ausgebildet ist. Diese Einfüllöffnung ist bevorzugt mit dem Überlauf bzw. einem Auslass des Überlaufs derart ausgerichtet, dass überlaufendes Wasser eines darüber angeordneten Moduls unter dem Einfluss der Schwerkraft in den Wassertank gelangen kann.

Wenn eine Abdeckung vorgesehen ist, dann kann diese Abdeckung abnehmbar ausgebildet sein. Wie vorstehend bereits erwähnt, ist es möglich, aber nicht zwingend, dass in der Abdeckung eine oder mehrere Einfüllöffnungen vorhanden sind. Eine geschlossene, abnehmbare Abdeckung kann beispielsweise nur für ein einziges Modul vorgesehen sein, welches im Vertikalbeet das oberste Pflanzmodul bildet. Das Wasser im Wassertank dieses Moduls kann durch die Abdeckung vor Verdunstung und Verunreinigung geschützt werden. Die Abdeckung braucht lediglich für einen Füllvorgang abgenommen zu werden. Derartige Abdeckungen sind für die Wassertanks der anderen Module nicht erforderlich, da diese jeweils durch das darüber liegende Modul geschützt sind.

Gemäß einer bevorzugten Ausgestaltung der Erfindung sind der Abfluss des Wassertanks und der Überlauf des Wassertanks getrennt voneinander aus dem Modul herausgeführt. Das abfließende Wasser und das überlaufende Wasser können so unabhängig voneinander dem jeweiligen Zielort zugeführt werden.

Ein weiteres bevorzugtes Ausführungsbeispiel sieht vor, dass der Abfluss des Wassertanks an wenigstens eine Bewässerungsleitung angeschlossen ist oder zu wenigstens einer Bewässerungsleitung führt, oder dass der Abfluss des Wassertanks derart ausgebildet ist, dass wenigstens eine Bewässerungsleitung angeschlossen werden kann.

Vorzugsweise ist die Bewässerungsleitung flexibel ausgebildet. Der Benutzer kann so beim Aufstellen des Vertikalbeetes den Verlauf der Bewässerungsleitung an die jeweiligen Gegebenheiten anpassen. Die Bewässerungsleitung kann beispielsweise von einem handelsüblichen Schlauchstück gebildet sein.

Bevorzugt ist vorgesehen, dass die Bewässerungsleitung derart verläuft oder verlegbar ist, dass sie sich ausgehend von dem Abfluss bis vertikal unterhalb der Vorderwand erstreckt, wobei bevorzugt die Bewässerungsleitung zwischen dem Wassertank und der Vorderwand innerhalb des Aufnahmebereiches verläuft. Vorzugsweise ist die Bewässerungsleitung durch die Vorderwand hindurch oder an der Vorderwand vorbeigeführt.

Des Weiteren ist bevorzugt vorgesehen, dass die Bewässerungsleitung einen Wasserabgabeabschnitt aufweist, der mit Wasseraustrittsöffnungen versehen und/oder aus einem wasserdurchlässigen Material hergestellt ist.

Die Bewässerungsleitung ist vorzugsweise an ihrem vom Abfluss entfernten Ende verschlossen. Ein zu schnelles Abfließen des Wassers aus dem Wassertank wird auf diese Weise verhindert. Alternativ können am vom Abfluss entfernten Ende der Bewässerungsleitung eine oder mehrere Austrittsöffnungen vorgesehen sein, deren Strömungsquerschnitt kleiner ist als die Querschnittsfläche der Bewässerungsleitung.

Vorzugsweise ist die Bewässerungsleitung zumindest bereichsweise entlang ihres Verlaufs mit Austrittsöffnungen versehen. Die Strömungsquerschnitte dieser Austrittsöffnungen sind insbesondere vergleichsweise klein im Vergleich zum Leitungsquerschnitt der Bewässerungsleitung. Hierdurch ist sichergestellt, dass das Wasser zwar vergleichsweise schnell vom Wassertank zum mit den Austrittsöffnungen versehenen Wasserabgabeabschnitt, also zum jeweils zu bewässernden Bereich, gelangen kann, aber vergleichsweise langsam abgegeben wird.

Gemäß einem weiteren Ausführungsbeispiel ist vorgesehen, dass der Überlauf des Wassertanks einen Einlass aufweist, der unterhalb eines oberen Randes des Wassertanks liegt. Hierdurch ist sichergestellt, dass das Wasser durch den Überlauf abfließt und nicht über den Rand des Wassertanks läuft.

Bevorzugt ist der Überlauf in der Höhe verstellbar, d.h. die Höhe des Einlasses des Überlaufs kann in der Höhe variierbar sein. Hierdurch kann die Füllmenge des Wassertanks verändert werden. Dies kann in einer möglichen Ausgestaltung z.B. dadurch realisiert werden, dass eine Ablaufleitung des Überlaufs - z.B. ein im Wassertank angeordnetes, mehrteiliges Ablaufrohr-je nach gewünschter Füllmenge im Wassertank aus einer entsprechenden Anzahl einzelner Leitungsabschnitte zusammengesetzt wird. Mit anderen Worten kann die Länge einer mehrteiligen Ablaufleitung durch die Anzahl der zusammengesetzten Leitungsabschnitte vorgegeben werden. Alternativ kann z.B. eine den Überlauf bildende Ablaufleitung, z.B. ein Rohr- oder Schlauchstück gleichbleibender Länge, mehr oder weniger weit durch eine insbesondere in einem Boden des Wassertanks ausgebildete Durchgangsöffnung nach unten gesteckt werden. Hierbei kann in Kauf genommen werden, dass bei vergleichsweise klein eingestellter Länge der Ablaufleitung im Wassertank die Ablaufleitung nach unten aus dem Modul hinaus vorsteht.

Vorzugsweise weist der Überlauf des Wassertanks einen Auslass auf, der vertikal unterhalb des Wassertanks liegt. Bevorzugt liegt der Auslass vertikal unterhalb einer oberen Seite des Wassertanks, die vorzugsweise zumindest bereichsweise offen ist.

Hierdurch wird erreicht, dass überlaufendes Wasser aus dem Wassertank direkt in den Wassertank eines darunterliegenden Moduls gelangen kann. Es ist also nicht erforderlich, außerhalb des Wassertanks oder außerhalb des Moduls Leitungen zu verlegen, um überlaufendes Wasser einem darunterliegenden Modul zuzuführen.

Vorzugsweise ist der Auslass des Überlaufs im Bereich des Modulbodens gelegen.

Ein bevorzugtes Ausführungsbeispiel sieht vor, dass der Überlauf des Wassertanks eine Ablaufleitung umfasst. Dies ermöglicht eine gezielte Führung des überlaufenden Wassers innerhalb des Moduls.

Die Ablaufleitung kann durch den Aufnahmebereich und einen den Aufnahmebereich begrenzenden Modulboden hindurchgeführt sein.

Bevorzugt endet die Ablaufleitung innerhalb des Modulbodens oder unterhalb des Modulbodens. Es ist folglich möglich, dass die Ablaufleitung über den Modulboden hinaus nach unten vorsteht. Dies kann insbesondere dann vorgesehen sein, wenn der Modulboden nicht an der Unterseite des Moduls, sondern gegenüber einer Standfläche des Moduls nach oben versetzt angeordnet ist.

Vorzugsweise weist die Ablaufleitung einen vertikalen Verlauf auf. Auf diese Weise kann das überlaufende Wasser auf kürzestem Wege zu einem darunterliegenden Modul gelangen.

Des Weiteren kann vorgesehen sein, dass das Pflanzmodul in mehrere nebeneinander gelegene, voneinander z.B. durch eine Wand getrennte Pflanzbereiche unterteilt ist, die jeweils einen eigenen Wassertank oder einen gemeinsamen Wassertank aufweisen.

Das erfindungsgemäße Vertikalbeet ist insbesondere selbsttragend ausgebildet. Wie an anderer Stelle bereits erwähnt, kann so auf ein zusätzliches Traggestell oder auf den Einsatz von Wandbefestigungen verzichtet werden.

Des Weiteren ist das Vertikalbeet vorzugsweise werkzeuglos aufstellbar.

Gemäß einem bevorzugten Ausführungsbeispiel sind die Pflanzmodule des Vertikalbeets in vertikaler Richtung ohne Versatz in horizontaler Richtung übereinander angeordnet. Dies minimiert den Platzbedarf für das Vertikalbeet. Alternativ können die übereinander angeordneten Pflanzmodule des Vertikalbeets in horizontaler Richtung gegeneinander versetzt angeordnet sein. Beispielsweise können die Pflanzmodule abwechselnd nach vorne und nach hinten und/oder nach links und nach rechts vorstehen (sogenannte "staggered-stack"-Anordnung). Eine selbsttragende Stapelung von Pflanzmodulen ist auch auf diese Weise möglich.

Es versteht sich, dass die Positionierung der das erfindungsgemäße Bewässerungskonzept betreffenden Bauteile und Bereiche in Abhängigkeit von der jeweiligen Relativpositionierung jeweils zweier unmittelbar übereinander angeordneter Pflanzmodule zu wählen ist.

Wie ebenfalls vorstehend bereits angemerkt, ist vorzugsweise vorgesehen, dass die Module des Vertikalbeets direkt aufeinander gestapelt sind. Alternativ können beispielsweise als Abstandshalter und/oder Adapter dienende Zwischenelemente vorgesehen sein.

Gemäß einer bevorzugten Ausführungsform ist vorgesehen, dass jeweils ein Paar unmittelbar übereinander angeordneter Module zumindest mit wenigstens einem Teil der Stirnseiten ihrer Seitenwände, bevorzugt zusätzlich ihrer Rückwände, aufeinander stehen.

Bevorzugt ist jeweils bei Paaren unmittelbar übereinander angeordneter Module die Vorderwand des oberen Moduls vertikal oberhalb des Pflanzbereiches des unteren Moduls angeordnet.

Des Weiteren kann vorgesehen sein, dass jeweils bei Paaren unmittelbar übereinander angeordneter Module ein Boden des oberen Moduls vertikal oberhalb des Wassertanks des unteren Moduls angeordnet ist.

Eine weitere Ausführungsform sieht vor, dass jeweils bei Paaren unmittelbar übereinander angeordneter Module der Abfluss des Wassertanks oder eine vom Abfluss ausgehende Bewässerungsleitung des oberen Moduls in den Pflanzbereich oder in einen Bereich oberhalb des Pflanzbereiches des unteren Moduls führt.

Gemäß einem bevorzugten Ausführungsbeispiel ist die Bewässerungsleitung oder eine Wasserabgabeabschnitt der Bewässerungsleitung des oberen Moduls innerhalb des Pflanzbereichs des unteren Moduls verlegt.

Eine weitere Ausführungsform schlägt vor, dass jeweils bei Paaren unmittelbar übereinander angeordneter Module ein Auslass des Überlaufs des Wassertanks des oberen Moduls vertikal oberhalb des Wassertanks des unteren Moduls angeordnet ist.

Vorzugsweise sind die Pflanzmodule des erfindungsgemäßen Vertikalbeets identisch ausgebildet.

Des Weiteren kann vorgesehen sein, dass unterhalb des untersten Pflanzmoduls ein, bevorzugt unabhängig von dem untersten Pflanzmodul handhabbarer, Auffangbehälter für zumindest aus dem Wassertank des untersten Pflanzmoduls überlaufendes Wasser angeordnet ist.

Der Auffangbehälter kann als, bevorzugt entnehmbarer, Bestandteil eines separaten Auffangmoduls ausgebildet sein, auf dem das unterste Pflanzmodul direkt oder unter Zwischenlage eines Zwischenelementes steht.

Wenn mehrere übereinander angeordnete Pflanzmodule als eine Spalte bezeichnet werden, dann kann ein erfindungsgemäßes Vertikalbeet eine Mehrzahl von derartigen Spalten aufweisen, die unmittelbar nebeneinander angeordnet und insbesondere, aber nicht notwendigerweise, durch geeignete Verbindungsmittel miteinander gekoppelt sind.

Die Erfindung betrifft außerdem die Verwendung einer Mehrzahl von, bevorzugt identisch ausgebildeten, Pflanzmodulen der hierin beschriebenen Art, wobei die Module übereinander angeordnet werden, und wobei jeweils bei Paaren unmittelbar übereinander angeordneter Module der Abfluss des Wassertanks des oberen Moduls zum Bewässern des Pflanzbereiches des unteren Moduls und der Überlauf des oberen Moduls zum Befüllen des Wassertanks des unteren Moduls verwendet wird.

Die Erfindung wird im Folgenden beispielhaft unter Bezugnahme auf die Zeichnung beschrieben. Es zeigen:
- Fig. 1: eine mögliche Ausführungsform eines erfindungsgemäßen Pflanzmoduls in einer perspektivischen Draufsicht,
- Fig. 2: ein erfindungsgemäßes Vertikalbeet mit einer Mehrzahl von aufeinandergestapelten Pflanzmodulen gemäß Fig. 1,
- Fig. 3: das erfindungsgemäße Pflanzmodul von Fig. 1 mit weiteren Details,
- Fig. 4: einen Querschnitt durch ein erfindungsgemäßes Pflanzmodul,
- Fig. 5: eine Draufsicht auf ein erfindungsgemäßes Pflanzmodul,
- Fig. 6: ein erfindungsgemäßes Vertikalbeet mit mehreren aufeinandergestapelten Pflanzmodulen gemäß Fig. 1, von denen weitere Details gezeigt sind,
- Fig. 7: ein erfindungsgemäßes Vertikalbeet entsprechend Fig. 6 mit bepflanzten Modulen, und
- Fig. 8: eine schematische Seitenansicht eines erfindungsgemäßen Vertikalbeetes mit bepflanzten Modulen.

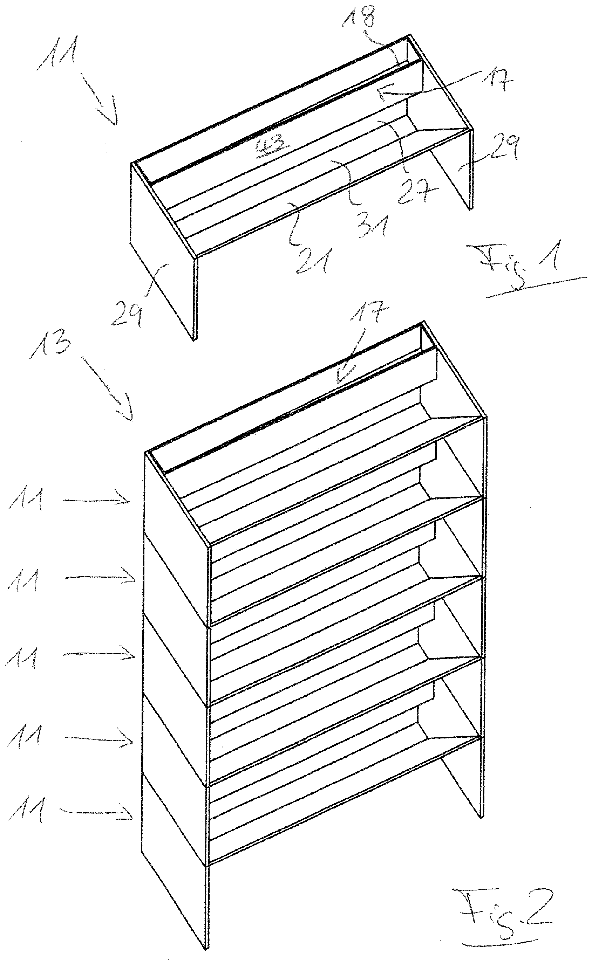

Im Ausführungsbeispiel der Fig. 1 besitzt das erfindungsgemäße Pflanzmodul 11 eine quaderförmige Grundform aus einer rechteckigen vertikalen Rückwand 27 und zwei rechteckigen vertikalen Seitenwänden 29.

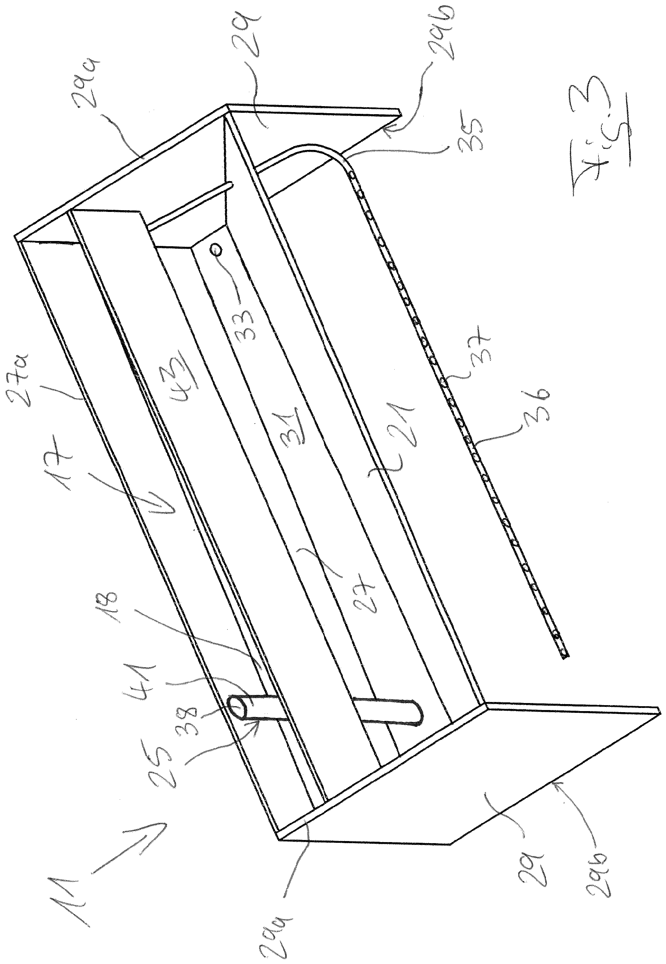

Die Vorderwand 21 des Moduls 11 verläuft nicht senkrecht, sondern erstreckt sich ausgehend von der oberen vorderen Kante des durch die Rückwand 27 und der Seitenwände 29 definierten Quaders schräg nach unten in einen weiter hinten gelegenen Bereich. Dabei endet die auf diese Weise geneigte Vorderwand 21 an der Unterseite des Moduls 11, allerdings in einem Abstand vom unteren Ende der Rückwand 27. Zwischen dem unteren Ende der Vorderwand 21 und dem unteren Ende der Rückwand 27 erstreckt sich an der Unterseite des Moduls 11 ein Modulboden 31, durch den das Modul 11 an seiner Unterseite geschlossen ist. Der Modulboden 31 ist zu einer der Seitenwände 29 hin mit einem Gefälle versehen, das zu einem hier nicht dargestellten Abfluss 33 des Modulbodens 31 führt (vgl. Fig. 3), worauf nachstehend näher eingegangen wird.

Die Breite des Pflanzmoduls 11 ist deutlich größer als seine Höhe und seine Tiefe. Die Breite kann beispielsweise 79 cm betragen, während die Höhe und die Tiefe des Moduls 11 jeweils 29 cm betragen. Grundsätzlich sind die Abmessungen des Pflanzmoduls 11 beliebig wählbar. Die Pflanzmodule 11 können in unterschiedlichen Größen und mit unterschiedlichen Verhältnissen zwischen Breite, Höhe und Tiefe hergestellt werden.

Das Modul 11 ist oben offen. Die schräge Vorderwand 21, die Rückwand 27, die beiden Seitenwände 29 und der Boden 31 begrenzen folglich einen nach oben offenen Aufnahmebereich, der mit Erde gefüllt und bepflanzt werden kann. Folglich ist in diesem Ausführungsbeispiel mit Ausnahme des von dem Wassertank 17 eingenommenen Volumens der Aufnahmebereich mit dem Pflanzbereich identisch.

Das Pflanzmodul 11 ist in Fig. 1 vereinfacht, nämlich ohne die Einzelheiten für ein erfindungsgemäßes Wasser- oder Bewässerungsmanagement dargestellt, worauf nachstehend insbesondere in Verbindung mit den Fig. 3 bis 5 näher eingegangen wird.

In dem hier dargestellten Ausführungsbeispiel sind die beiden Seitenteile 29 nicht entsprechend der Neigung der Vorderwand 21 abgeschrägt, sondern stehen über die Vorderwand 21 hinaus nach vorne vor. Dies hat den Vorteil, dass die Seitenwände 29 mit ihren unteren Stirnseiten über die gesamte Modultiefe eine Standfläche bereitstellen.

Im aufeinandergestapelten Zustand, wie in Fig. 2 gezeigt, ergibt sich somit eine besonders stabile Übereinanderanordnung mehrerer Pflanzmodule 11.

Ein solches Vorziehen der Seitenwände 29 ist jedoch nicht zwingend. In einer alternativen Ausgestaltung können die Seitenwände 29 abgeschrägt sein und jeweils mit ihrer vorderen Stirnseite bündig mit der Vorderwand 21 abschließen.

Der Wassertank 17 des Moduls 11 erstreckt sich über die gesamte Modulbreite und wird in diesem Ausführungsbeispiel von der Rückwand 27, den beiden Seitenwänden 29, einer Vorderwand 43 und einem Boden 18 begrenzt. Wie der Modulboden 31 ist auch der Boden 18 des Wassertanks 17 mit einem Gefälle zu einer der Seitenwände 20 hin versehen, worauf ebenfalls nachstehend näher eingegangen wird.

Während in diesem Ausführungsbeispiel die Rückwand 27 und die beiden Seitenwände 29 sowohl den Aufnahmebereich des Moduls 11 als auch den Wassertank 17 begrenzen, kann in einer alternativen Ausgestaltung der Wassertank 17 beispielsweise als ein separates Bauteil ausgebildet sein, das an dem Modul 11 lösbar oder unlösbar angebracht ist.

Jedoch ist in einer bevorzugten Ausgestaltung der Wassertank 17 ein integraler Bestandteil des Moduls 11, welches insbesondere aus Kunststoff, beispielsweise recyceltem Kunststoff, hergestellt ist. Dabei können die Rückwand 27, die Seitenwände 29, die Vorderwand 21, der Modulboden 31 und der Wassertank 17 einstückig miteinander ausgebildet sein.

Bei dem erfindungsgemäßen Vertikalbeet 13 gemäß Fig. 2 sind hier beispielhaft fünf Pflanzmodule 11 gemäß Fig. 1 dargestellt, die direkt aufeinandergestapelt sind. Die Seitenwände 29 und die Rückwand 27 jedes Moduls 11 stehen folglich jeweils mit ihren unteren Stirnseiten auf den oberen Stirnseiten der Seitenteile 29 bzw. der Rückwand 27 des jeweils darunterliegenden Moduls 11.

Die Seitenteile 29 und die Rückwand 27 können derart ausgestaltet sein, dass die Module 11 stabil aufeinander stehen und so keine zusätzlichen Befestigungs- oder Verbindungsmittel benötigt werden. Es ist zudem nicht erforderlich, das Vertikalbeet 13 an eine Wand zu lehnen oder einer Wand zu befestigen oder sonstige Sicherungsmaßnahmen vorzunehmen. Die Pflanzmodule 11 sind frei stapelbar. Das Vertikalbeet 13 ist folglich selbsttragend.

Es ist nicht zwingend, dass auch die Rückwand 27 mit ihrer unteren Stirnseite zur Standfläche des Moduls 11 beiträgt. Es kann genügen, wenn die Module 11 ausschließlich über ihre Seitenwände 29 aufeinander gestellt sind. Die untere Stirnseite der Rückwand 27 kann z.B. gegenüber den unteren Stirnseiten der Seitenwände 29 zurückspringen. Hieraus resultieren dann an der Rückseite des Vertikalbeets 13 entsprechende Öffnungen.

Des Weiteren brauchen die unteren Stirnseiten der Seitenwände 29 nicht durchgehend horizontal zu verlaufen. Dies gilt auch für die oberen Stirnseiten der Seitenwände 29. Im aufeinandergestapelten Zustand können die Module 11 beispielsweise über jeweils durch den Verlauf der oberen und unteren Stirnseiten der Seitenwände 29 gebildete Vorsprünge aufeinander gestellt sein.

Des Weiteren ist es möglich, dass an den oberen und/oder unteren Stirnseiten angebrachte Elemente vorhanden sind, über welche die Module 11 aufeinander stehen.

In dem Ausführungsbeispiel der Fig. 2 sind die Module 11 zur Bildung des erfindungsgemäßen Vertikalbeetes 13 direkt aufeinandergestapelt. Dies ist vorteilhaft, da für das Vertikalbeet 13 ausschließlich zueinander identische Pflanzmodule 11 benötigt werden. Zwingend ist dies erfindungsgemäß aber nicht. So können beispielsweise nicht dargestellte Zwischenelemente gleicher oder unterschiedlicher Höhe vorgesehen sein, die vom Benutzer wahlweise zwischen zwei unmittelbar aufeinanderfolgende Module 11 gebracht werden können. Auf diese Weise kann die lichte Höhe zwischen dem Pflanzbereich eines Moduls und der schrägen Vorderwand 21 des darüber liegenden Moduls 11 variiert und an die jeweils gewünschte Bepflanzung angepasst werden.

Fig. 3 zeigt das erfindungsgemäße Pflanzmodul 11 von Fig. 1 in einer vergrößerten Darstellung und mit weiteren Komponenten des erfindungsgemäßen Bewässerungssystems.

Der Wassertank 17 ist mit einem Überlauf 25 versehen. Der Überlauf 25 umfasst eine vertikal verlaufende Ablaufleitung 41 beispielsweise in Form eines Kunststoffrohres. Der Einlass 38 des Überlaufs 25, also die obere Öffnung der Ablaufleitung 41, liegt etwas unterhalb des oberen Randes des Wassertanks 17, der durch die hier in einer gemeinsamen Ebene liegenden oberen Stirnseiten 27a, 29a und 43a der Rückwand 27, der Seitenwände 29 und der Vorderwand 43 des Wassertanks 17 definiert ist.

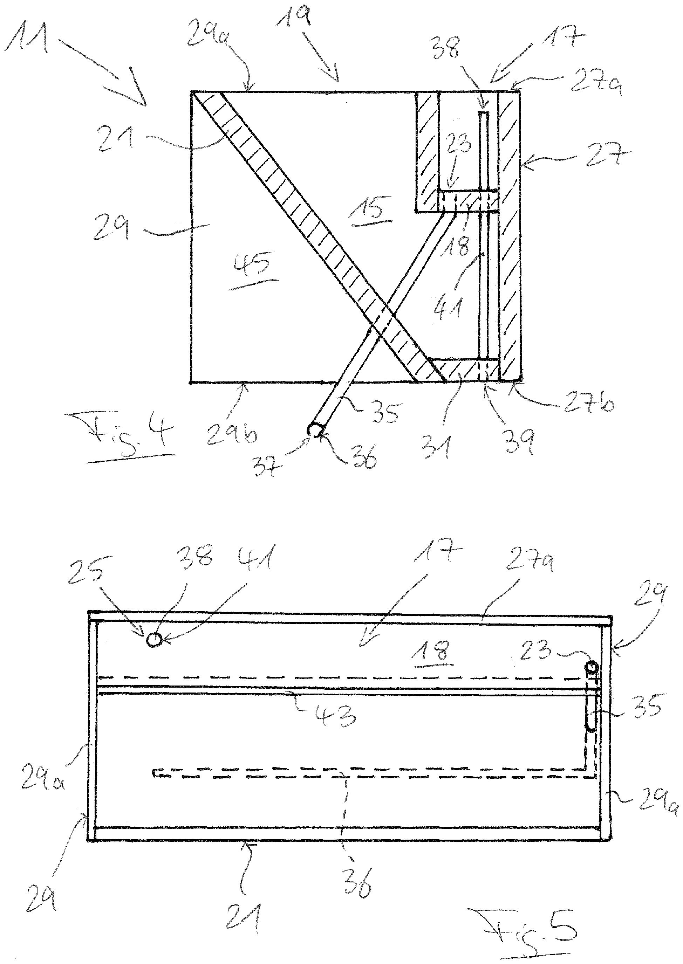

Die Ablaufleitung 41 erstreckt sich durch eine im Boden 18 des Wassertanks 17 ausgebildete Durchgangsöffnung hindurch nach unten, verläuft dann durch den Pflanzbereich des Moduls 11 und mündet an der Unterseite des Moduls 11 oder in einer hierzu im Modulboden 31 ausgebildeten, an der Modulunterseite mündenden Durchgangsöffnung (vgl. Fig. 4). Diese Durchgangsöffnung oder die untere Öffnung der Ablaufleitung 41 bildet folglich den Auslass des Überlaufs 25.

An den bereits erwähnten, in Fig. 3 durch die Vorderwand 21 des Wassertanks 18 verdeckten Abfluss 23 des Wassertanks 17, der in dessen Boden 18 ausgebildet ist (vgl. Fig. 4), schließt sich eine Bewässerungsleitung 35 an, die beispielsweise von einem Abschnitt eines handelsüblichen Schlauchs oder einer anderen flexiblen Leitung gebildet werden kann.

Die Bewässerungsleitung 35 erstreckt sich ausgehend von dem Abfluss 23 des Wassertanks 17 innerhalb des Moduls, nämlich in der Nähe der Innenseite einer der Seitenwände 29, schräg nach unten durch den Pflanzbereich und durch die schräg verlaufende Vorderwand 21 hindurch und verläuft dann zwischen den beiden Seitenwänden 29 im Wesentlichen über die gesamte Breite des Moduls 11. Dieser sich zwischen den beiden Seitenwänden 29 erstreckende Wasserabgabeabschnitt 36 der Bewässerungsleitung 35 ist mit Austrittsöffnungen 37 versehen und an seinem freien Ende verschlossen.

Über den Abfluss 23 des Wassertanks 17 in die Bewässerungsleitung 35 gelangendes Wasser kann folglich nur über die vergleichsweise kleinen Austrittsöffnungen 37 austreten, um so den Pflanzbereich eines darunterliegenden Pflanzmoduls 11 bewässern zu können.

Das bereits erwähnte Gefälle des Bodens 18 des Wassertanks 17 führt zu dem in die Bewässerungsleitung 35 mündenden Abfluss 23 (vgl. Fig. 4).

Wie vorstehend bereits erwähnt, ist auch der Modulboden 31 mit einem Gefälle versehen, das zu einem nahe an einer der Seitenwände 29 gelegenen Abfluss 33 führt, über den Wasser aus dem Modul 11 nach unten austreten kann.

Das erfindungsgemäße Pflanzmodul 11 umfasst folglich zusätzlich zu den in Verbindung mit Fig. 1 erläuterten Bestandteilen, welche die Stabilität gewährleisten, für die Stapelbarkeit sorgen und die erforderlichen Volumina für den Pflanzbereich und den Wassertank begrenzen, nicht mehr als eine Ablaufleitung 41 für den Überlauf 25, beispielsweise in Form eines einfachen Kunststoffrohres, und eine Bewässerungsleitung 35, beispielsweise in Form eines einfaches Schlauchstücks. Darüber hinaus ist es lediglich erforderlich, die entsprechenden Durchgangsöffnungen im Boden 18 des Wassertanks 17, im Modulboden 31 sowie in der Vorderwand 21 auszubilden.

Das erfindungsgemäße Pflanzmodul 11 kann folglich besonders einfach und äußerst kostengünstig hergestellt werden und ist deshalb für eine Massenproduktion gut geeignet.

Dem Querschnitt gemäß Fig. 4 ist insbesondere zu entnehmen, dass in den Wassertank 17 gelangendes Wasser über den Abfluss 23 im Boden 18 in die Bewässerungsleitung 35 und in den mit den Austrittsöffnungen 37 versehenen Abschnitt 36 gelangt.

In den Einlass 38 der Ablaufleitung 41 des Überlaufs gelangendes Wasser fließt durch das gesamte Modul 11 nach unten und tritt über den Auslass 39 an der Unterseite des Moduls 11 aus.

Der nicht vom Wassertank 17 eingenommene Raum des Aufnahmebereichs 19 steht als Pflanzbereich 15 zur Verfügung. Unterhalb der Vorderwand 21 begrenzen diese und die beiden Seitenwände 29 einen Leerraum 45, der nach unten und nach vorne offen ist. Die im Pflanzbereich 15 eines darunterliegenden Moduls 11 wachsenden Pflanzen können folglich in diesen Leerraum 45 hinein und durch den Leerraum 45 hindurch aus der Vorderseite des Vertikalbeets heraus nach vorne und nach oben wachsen.

Die Draufsicht der Fig. 5 veranschaulicht die Lage der vertikal verlaufenden Ablaufleitung 41 sowie der zunächst schräg nach unten verlaufenden und sich dann mit dem Abschnitt 36 zwischen den beiden Seitenwänden 29 erstreckenden Bewässerungsleitung 35.

Der Übergang zwischen der schrägen Vorderwand 21 und dem Modulboden 31 liegt unterhalb des Wassertanks 17 und ist in Fig. 5 durch eine sich zwischen den beiden Seitenwänden 29 erstreckende gestrichelte Linie angedeutet.

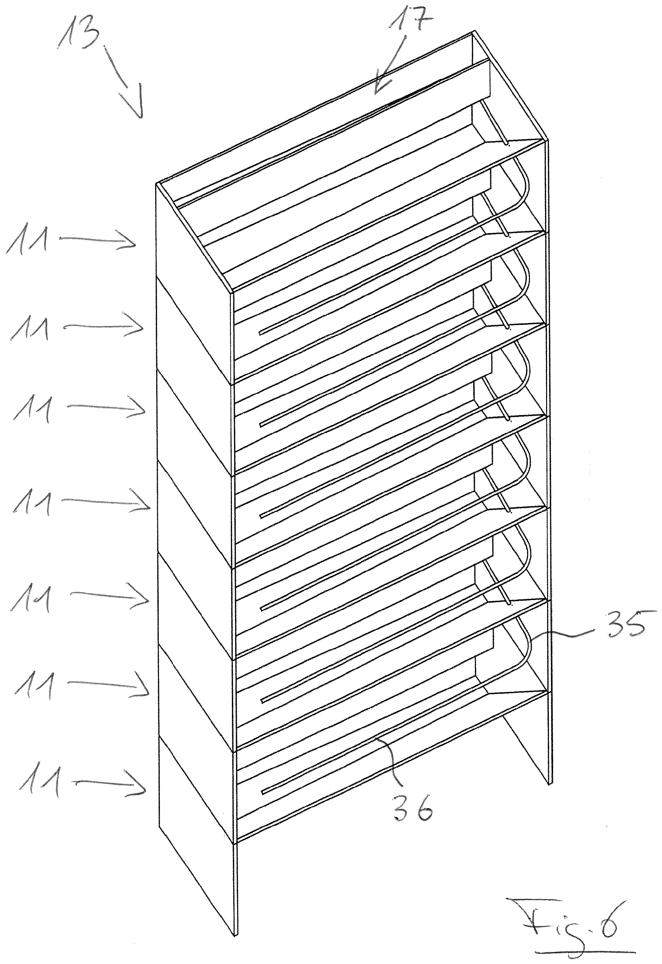

Die Darstellung eines erfindungsgemäßen Vertikalbeets 13 in Fig. 6 entspricht der Darstellung in Fig. 2, wobei jedoch statt fünf hier sieben direkt aufeinandergestapelte Pflanzmodule 11 vorgesehen und zusätzlich jeweils die Bewässerungsleitung 35 dargestellt ist, die sich mit ihrem mit den Austrittsöffnungen für das Wasser versehenen Abschnitt 36 durch den Pflanzbereich des jeweils darunterliegenden Moduls 11 erstreckt. Somit sorgt jedes Modul 11 für die Bewässerung des Pflanzbereiches des jeweils darunterliegenden Moduls 11.

Das unterste Modul 11 ist folglich nicht mit einer Bewässerungsleitung 35 versehen. Das aus dem untersten Modul 11 über den im Boden 18 des Wassertanks 17 ausgebildeten Abfluss 23 und den Abfluss 33 des Modulbodens 31 (vgl. Fig. 4 und 5) austretende Wasser kann beispielsweise mit einem nicht dargestellten Auffangbehälter aufgefangen werden. Dieser Behälter kann entnehmbar sein, um das aufgefangene Wasser erneut verwenden zu können, beispielsweise zum Befüllen des Wassertanks 17 des obersten Moduls 11.

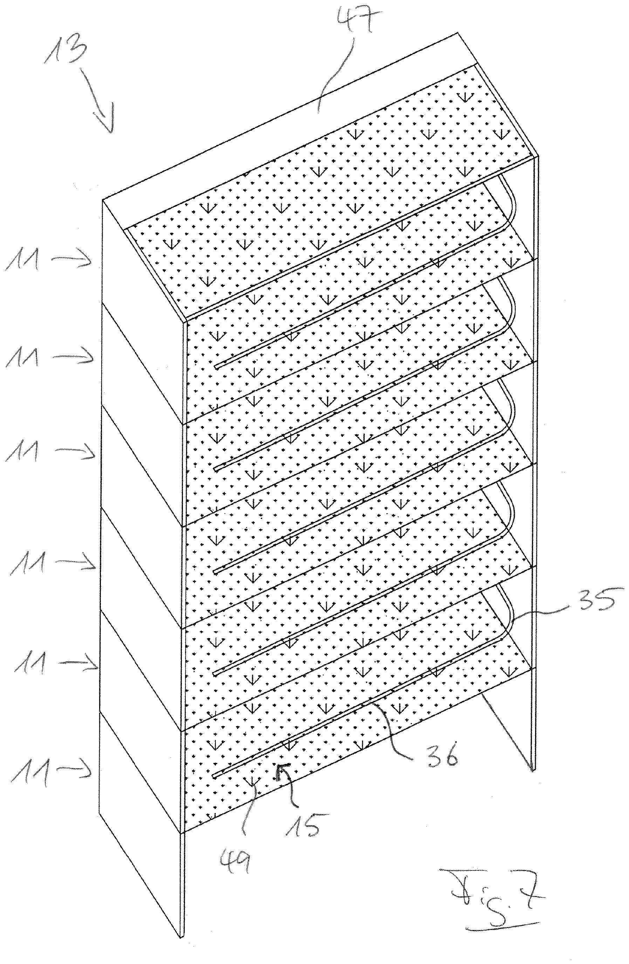

Fig. 7 veranschaulicht insbesondere, dass die Bewässerungsleitung 35 eines jeweiligen Moduls 11 im Vertikalbeet 13, also bei aufeinandergestapelten Modulen 11, im Pflanzbereich 15 des jeweils darunterliegenden Moduls 11 verlegt ist.

Fig. 7 zeigt außerdem, dass der Wassertank des obersten Moduls 11 mit einer Abdeckung 47 versehen ist, um eine Verdunstung und Verunreinigung des Wassers im Wassertank zu verhindern. Die Abdeckung 47 kann abgenommen werden, um den Wassertank zu befüllen.

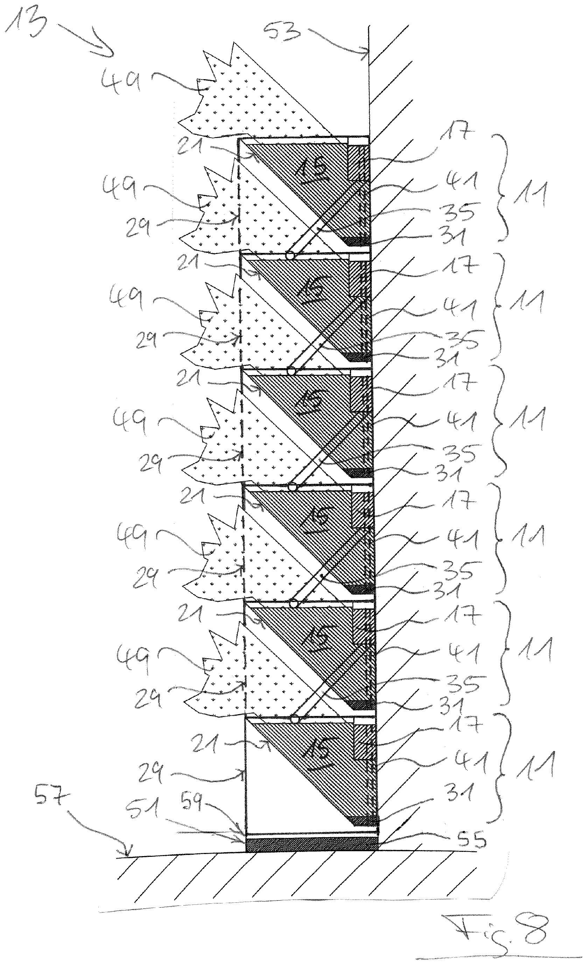

Fig. 8 veranschaulicht insbesondere das erfindungsgemäße Bewässerungskonzept. In dem hier dargestellten Beispiel eines erfindungsgemäßen Vertikalbeetes 13 sind sechs erfindungsgemäße Pflanzmodule 11 direkt aufeinandergestapelt, wobei dieser Stapel auf einem Sockel 59 steht, der einen entnehmbaren Auffangbehälter 51 aufnimmt, in welchem in der Darstellung gemäß Fig. 8 Wasser 55 enthalten ist.

Das Vertikalbeet 13 steht auf dem Boden 57 und mit seiner Rückseite unmittelbar an einer Wand 53. Wie eingangs bereits erwähnt, ist aufgrund der selbsttragenden Ausgestaltung des Vertikalbeetes 13 eine Befestigung an der Wand 53 nicht erforderlich. Aus Sicherheitsgründen kann aber vorgesehen sein, dass ein oder mehrere Module 11 an der Wand 53 befestigt werden.

Um alle Pflanzbereiche 15 der Module 11 zu bewässern, braucht ein Benutzer ausschließlich den Wassertank 17 des obersten Moduls 11 mit Wasser zu befüllen, und zwar solange, bis durch den kaskadenartigen Überlauf alle Wassertanks 17 gefüllt sind.

Wie Fig. 8 veranschaulicht, gelangt überlaufendes Wasser jeweils über den Auslass 39 (vgl. Fig. 4) im Modulboden 31 direkt in den oben offenen Wassertank 17 des darunterliegenden Moduls 11. Auf diese Weise kann der Benutzer alle Wassertanks 17 sehr schnell vollständig füllen.

Im Vergleich hierzu erfolgt die Abgabe des Wassers über die Bewässerungsleitungen 35 an den jeweils darunterliegenden Pflanzbereich 15 vergleichsweise langsam. Die Ausgestaltung des jeweils im Pflanzbereich 15 verlegten Wasserabgabeabschnitts 36 der Bewässerungsleitung 35 kann beliebig ausgeführt sein. Insbesondere können Anzahl und Größe der erwähnten Wasseraustrittsöffnungen 37 beliebig variiert werden. Anstelle einer mit Austrittsöffnungen versehenen Leitung kann innerhalb der Pflanzbereiche 15 jeweils ein Wasserabgabeelement verlegt sein, das nicht die Form einer Leitung aufzuweisen braucht, sondern grundsätzlich beliebig geformt sein kann, beispielsweise streifen-, platten- oder mattenförmig. Das Material eines solchen Wasserabgabeelements kann grundsätzlich beliebig gewählt sein. Beispielsweise kann ein Material gewählt werden, welches das über die Leitung 35 zugeführte Wasser speichern kann und das Wasser nur dann an die umliegende Erde abgibt, wenn deren Feuchtigkeitsgehalt einen bestimmten Wert unterschreitet.

Es versteht sich, dass der Pflanzbereich 15 des obersten Moduls nicht im erfindungsgemäßen Sinne "automatisch" bewässert werden kann, sondern manuell mit Wasser zu versorgen ist.

### Bezugszeichenliste

- 11: Pflanzmodul
- 13: Vertikalbeet
- 15: Pflanzbereich
- 17: Wassertank
- 18: Boden des Wassertanks
- 19: Aufnahmebereich
- 21: Vorderwand
- 23: Abfluss des Wassertanks
- 25: Überlauf des Wassertanks
- 27: Rückwand
- 27a: Obere Stirnseite
- 27b: Untere Stirnseite
- 29: Seitenwand
- 29a: Obere Stirnseite
- 29b: Untere Stirnseite
- 31: Modulboden
- 33: Abfluss des Modulbodens
- 35: Bewässerungsleitung
- 36: Wasserabgabeabschnitt
- 37: Austrittsöffnung
- 38: Einlass des Überlaufs
- 39: Auslass des Überlaufs
- 41: Ablaufleitung des Überlaufs
- 43: Vorderwand des Wassertanks
- 45: Leerraum
- 47: Abdeckung
- 49: Bepflanzung
- 51: Auffangbehälter
- 53: Wand
- 55: Wasser
- 57: Boden
- 59: Sockel

## Patentansprüche

1. Stapelbares Pflanzmodul (11) für ein Vertikalbeet (13),
mit einem Pflanzbereich (15) und mit einem Wassertank (17),
- wobei der Pflanzbereich (15) in einem zumindest teilweise nach oben offenen Aufnahmebereich (19) des Moduls (11) enthalten ist, der durch eine Vorderwand (21) des Moduls (11) begrenzt ist, die sich zwischen einem vorderen oberen Bereich und einem weiter hinten gelegenen unteren Bereich erstreckt, und
- wobei der Wassertank (17) einen Abfluss (23) und einen Überlauf (25) aufweist.

2. Modul nach Anspruch 1,
wobei der Abfluss (23) zum Bewässern des Pflanzbereichs (15) eines unterhalb des Moduls (11) befindlichen weiteren Pflanzmoduls (11) ausgebildet ist, und/oder wobei der Überlauf (25) zum Befüllen des Wassertanks (17) eines unterhalb des Moduls (11) befindlichen weiteren Pflanzmoduls (11) ausgebildet ist.

3. Modul nach Anspruch 1 oder 2,
wobei das Modul (11) eine kastenförmige Grundform aufweist, die von der Vorderwand (21), einer bevorzugt vertikalen Rückwand (27) und zwei bevorzugt vertikalen Seitenwänden (29) festgelegt ist, insbesondere wobei die Seitenwände (29) zumindest bereichsweise über die Vorderwand (21) hinaus nach vorne vorstehen und insbesondere eine quadratische oder rechteckige Grundform aufweisen.

4. Modul nach Anspruch 3,
wobei eine Standfläche des Moduls (11) und eine Auflagefläche des Moduls (11) jeweils zumindest von wenigstens einem Teil der Stirnseiten (27a, 27b, 29a, 29b) der beiden Seitenwände (29), bevorzugt zusätzlich der Rückwand (27), gebildet sind.

5. Modul nach einem der vorhergehenden Ansprüche,
wobei das Modul (11) einen Boden (31) aufweist, der mit einem Abfluss (33) versehen ist und ein zu dem Abfluss (33) führendes Gefälle aufweist, und/oder wobei der Wassertank (17) in einem hinteren Bereich des Moduls (11) angeordnet ist, wobei bevorzugt der Wassertank (17) und ein mit einem Abfluss (23) versehener Modulboden (31) vertikal übereinander angeordnet sind,
und/oder wobei der Pflanzbereich (15) von dem gesamten Aufnahmebereich (19) mit Ausnahme des von dem Wassertank (17) eingenommenen Raumes gebildet ist.

6. Modul nach einem der vorhergehenden Ansprüche,
wobei der Aufnahmebereich (19) und der Wassertank (17) eine als Ganzes handhabbare Einheit bilden, wobei bevorzugt der Aufnahmebereich (19) und der Wassertank (17) an einem gemeinsamen Basisteil angeordnet oder von einem gemeinsamen, bevorzugt einstückig ausgebildeten Basisteil gebildet sind,
und/oder wobei der Aufnahmebereich (19) von einem Basisteil in Form eines Behälters gebildet ist, und wobei der Wassertank (17) entweder ein separates, am Behälter angeordnetes Bauteil oder einstückig mit dem Behälter ausgebildet ist.

7. Modul nach Anspruch 6,
wobei das Basisteil wasserundurchlässig ist, wobei bevorzugt das Basisteil aus Kunststoff hergestellt ist,
und/oder wobei das Basisteil zumindest bereichsweise von einer äußeren Verkleidung umgeben ist.

8. Modul nach einem der vorhergehenden Ansprüche,
wobei der Wassertank (17) von oben befüllbar ist, wobei bevorzugt der Wassertank (17) oben offen ist,
und/oder wobei der Abfluss (23) des Wassertanks (17) und der Überlauf (25) des Wassertanks (17) getrennt voneinander aus dem Modul (11) herausgeführt sind.

9. Modul nach einem der vorhergehenden Ansprüche,
wobei der Abfluss (23) an wenigstens eine Bewässerungsleitung (35) angeschlossen ist oder zu wenigstens einer Bewässerungsleitung (35) führt, oder wobei der Abfluss (23) derart ausgebildet ist, dass wenigstens eine Bewässerungsleitung (35) angeschlossen werden kann,
insbesondere wobei die Bewässerungsleitung (35) flexibel ausgebildet ist.

10. Modul nach Anspruch 9,
wobei die Bewässerungsleitung (35) derart verläuft oder verlegbar ist, dass sie sich ausgehend von dem Abfluss (23) bis vertikal unterhalb der Vorderwand (21) erstreckt, wobei bevorzugt die Bewässerungsleitung (35) zwischen dem Wassertank (17) und der Vorderwand (21) innerhalb des Aufnahmebereiches (19) verläuft,
und/oder wobei die Bewässerungsleitung (35) einen Wasserabgabeabschnitt (36) aufweist, der mit Wasseraustrittsöffnungen (37) versehen und/oder aus einem wasserdurchlässigen Material hergestellt ist.

11. Modul nach einem der vorhergehenden Ansprüche,
wobei der Überlauf (25) des Wassertanks (17) einen Auslass (39) aufweist, der vertikal unterhalb des Wassertanks (17) liegt, insbesondere vertikal unterhalb einer, bevorzugt zumindest bereichsweise offenen, oberen Seite des Wassertanks (17),
insbesondere wobei der Auslass (39) des Überlaufs (25) im Bereich des Modulbodens (31) gelegen ist.

12. Modul nach einem der vorhergehenden Ansprüche,
wobei der Überlauf (25) des Wassertanks (17) eine Ablaufleitung (41) umfasst, wobei bevorzugt die Ablaufleitung (41) einen vertikalen Verlauf aufweist,
insbesondere wobei die Ablaufleitung (41) durch den Aufnahmebereich (19) und einen den Aufnahmebereich (19) begrenzenden Modulboden (31) hindurch geführt ist.

13. Vertikalbeet (13) mit einer Mehrzahl von übereinander angeordneten Pflanzmodulen (11), die jeweils die Merkmale eines der vorstehenden Ansprüche aufweisen,
insbesondere wobei es selbsttragend ausgebildet ist.

14. Vertikalbeet nach Anspruch 13,
wobei die Module (11) direkt aufeinander gestapelt sind, und/oder wobei Zwischenelemente vorgesehen sind, die zwischen jeweils zwei Module bringbar sind,
und/oder wobei jeweils bei Paaren unmittelbar übereinander angeordneter Module (11) der Abfluss (23) des Wassertanks (17) oder eine vom Abfluss (23) ausgehende Bewässerungsleitung (35) des oberen Moduls (11) in den Pflanzbereich (15) oder in einen Bereich oberhalb des Pflanzbereiches (15) des unteren Moduls (11) führt, wobei ein Wasserabgabeabschnitt (36) der Bewässerungsleitung (35) des oberen Moduls (11) innerhalb des Pflanzbereiches (15) des unteren Moduls (11) verlegt ist,
und/oder wobei jeweils bei Paaren unmittelbar übereinander angeordneter Module (11) ein Auslass (39) des Überlaufs (25) des Wassertanks (17) des oberen Moduls (11) vertikal oberhalb des Wassertanks (17) des unteren Moduls (11) angeordnet ist,
und/oder wobei die Pflanzmodule identisch ausgebildet sind.

15. Verwendung einer Mehrzahl von, bevorzugt identisch ausgebildeten, Pflanzmodulen (11) nach einem der Ansprüche 1 bis 12 zur Bildung eines Vertikalbeetes (13),
wobei die Module (11) übereinander angeordnet werden, und
wobei jeweils bei Paaren unmittelbar übereinander angeordneter Module (11) der Abfluss (23) des Wassertanks (17) des oberen Moduls (11) zum Bewässern des Pflanzbereiches (15) des unteren Moduls (11) und der Überlauf (25) des oberen Moduls (11) zum Befüllen des Wassertanks (17) des unteren Moduls verwendet wird.
